# EUROPEAN PATENT APPLICATION

(11) **EP 4 310 346 A1**
(43) Date of publication of application: **24.01.2024**
(21) Application number: 22833207.8
(22) Date of filing: 29.06.2022
(51) Int. Cl.: F16B 5/02, F16B 5/04

(54) **JOINT STRUCTURE**

(30) Priority: 29.06.2021 JP 2021107689
(71) Applicant: Nippon Steel Corporation, Tokyo 100-8071 (JP)
(72) Inventor: ONO, Atsushi, Tokyo 100-8071 (JP); FUJIMOTO, Hiroki, Tokyo 100-8071 (JP); HAMADA, Koichi, Tokyo 100-8071 (JP); KAMO, Masanobu, Tokyo 100-8071 (JP); IMAMURA, Takashi, Tokyo 100-8071 (JP)
(74) Representative: Zimmermann & Partner Patentanwälte mbB
(86) International application number: PCT/JP2022/025960
(87) International publication number: WO 2023/277061

(57) **Abstract**

A joint structure according to an aspect of the present invention includes: a first metal sheet on which a cylindrical first rising portion is formed; at least one target material in which a through hole into which the first rising portion is inserted is formed and which is joined to the first metal sheet; and a joint member which is inserted into the first rising portion and joins the first metal sheet and the target material which are superimposed on each other to each other, wherein the joint member has a shaft portion which is inserted inside the first rising portion, and a first surface which is a surface opposite to a surface facing the first metal sheet of both surfaces of the target material and a tip end portion of the first rising portion are at different positions in an axial direction of the first rising portion.

## Description

### [Technical Field]

The present invention relates to a joint structure in which a base material on which a burring portion is formed and a target material to be joined are joined to each other by a joint member.

Priority is claimed on Japanese Patent Application No. 2021-107689, filed June 29, 2021, the content of which is incorporated herein by reference.

### [Background Art]

An application of a high-strength steel sheet is being promoted for the purpose of reducing the weight of automobiles and improving collision safety performance. However, a spot-welded joint constituted by high-strength steel sheets has a problem that the joint strength decreases as the tensile strength of a base steel sheet increases. For example, when the tensile strength of the base steel sheet exceeds 780 MPa, there is a problem that the cross tension strength (CTS) decreases. Moreover, when the tensile strength of the steel sheet exceeds 1500 MPa, not only the cross tension strength but also the tensile shear strength (TSS) tends to decrease.

The cross tension strength means the strength of a joint portion with respect to stress in a peeling direction. The stress in the peeling direction is stress applied to the joint portion by pulling two or more metal sheets constituting a joint structure in directions perpendicular to a sheet surface and away from each other. Further, the tensile shear strength is the strength of a joint portion with respect to shear stress. The shear stress is stress applied to the joint portion by pulling two or more metal sheets constituting a joint structure in directions parallel to a sheet surface and away from each other. The cross tension strength (CTS) is measured according to JIS Z 3137:1999, and the tensile shear strength (TSS) is measured according to JIS Z 3136:1999.

A decrease in joint strength occurs due to embrittlement of the nugget formed in the high-strength steel sheet containing a large amount of carbon. In the high-strength steel sheet, toughness is ensured by applying heat treatment under various conditions to optimize the metallographic structure. However, when the high-strength steel sheets are spot-welded, the metallographic structure changes in the nugget and its surrounding heataffected zone, resulting in embrittlement of the joint portion.

If the strength of the spot-welded joint is reduced, a welded portion may fracture when a member is deformed due to collision under very severe conditions. Therefore, even if the strength of the steel sheet is improved, the load capacity of the entire member may be insufficient. Therefore, there is a demand for a joining method that improves the strength of a joint constituted by the high-strength steel sheets.

Besides welding, mechanical joining using a joint member such as a rivet is available as means for joining sheet members to each other. For example, the following techniques have been disclosed with respect to a joint structure obtained by the mechanical joining.

Patent Document 1 discloses a coupling structure of a thin sheet in which the thin sheet is coupled to an object to be coupled by inserting a coupling shaft into a coupling hole formed in the thin sheet and the object to be coupled and tightly fastening the thin sheet and the object to be coupled with the coupling shaft and a fixing portion formed integrally with or separately from the coupling shaft, wherein a cylindrical flange is made to continuously protrude around the coupling hole formed in the thin sheet, and a bag-like portion fitted around the outer circumference of the cylindrical flange is provided in the coupling shaft or the fixing portion.

Further, as an example of the related art of a joint structure in which a base material having a burring portion formed thereon and a target material to be joined are joined by a joint member, Patent Document 2 discloses a coupling structure of sheet materials in a vehicle in which a thin sheet and a thick sheet that are superimposed on each other are coupled to each other through a through hole provided in each of both of the thin sheet and the thick sheet with a fastening means, wherein the through hole of the thin sheet is formed in a burring shape having a cylindrical portion. In this joint structure, in a state where an insertion hole for inserting the burring portion of the base material is formed in the target material and the burring portion is inserted into the insertion hole to stack the target material and the base material on each other, the target material is joined to the base material by a joint member having a shaft portion on which an outer circumferential surface in contact with an inner circumferential surface of the burring portion is formed.

### [Citation List]

### [Patent Document]

[Patent Document 1]
   Japanese Unexamined Patent Application, First Publication No. 2001-12421
[Patent Document 2]
   Japanese Unexamined Patent Application, First Publication No. 2003-260964

### [Summary of the Invention]

### [Problems to be Solved by the Invention]

The present inventors focused on riveting as one means of improving the cross tension strength of a joint. Riveting is a joining method in which the metal sheets are fixed to each other with a head portion and a plastic deformation portion of a rivet by forming a through hole in the metal sheet, inserting the rivet having the head portion and a shaft portion into the through hole, and plastically deforming the tip end of the shaft portion of the rivet. The present inventors have found that the cross tension strength of a joint obtained by riveting the high-strength steel sheets (a riveted joint) is significantly higher than that of a spot-welded joint. The riveting for mechanically joining the steel sheets to each other does not cause embrittlement of the joint portion, and thus it is considered that the CTS of the joint constituted by the high-strength steel sheet can be maintained to be higher. On the other hand, according to experiments by the present inventors, it has also been clarified that the riveted joint does not function to improve the tensile shear strength (TSS).

In the technique of Patent Document 1, means for improving the TSS in riveting is not investigated. In Patent Document 1, an object thereof is to provide a coupling structure of thin sheets capable of coupling members formed of a thin sheet to each other with high strength and rigidity, but a direction of the stress applied to the coupling shaft has not been specifically investigated, and therefore no investigation has focused on improving the TSS. Moreover, Patent Document 1 does not disclose a configuration for improving the TSS.

According to the joint structure of Patent Document 2, since the outer circumferential surface of the shaft portion of the joint member is in contact with the inner circumferential surface of the burring portion, in a case where a load is applied from the outside such that the target material and the base material that constitute a sheet set are separated from each other, a load in a direction orthogonal to an axial direction of loads acting on the joint member, that is, a load in a direction in which the shaft portion is sheared, is transmitted from the inner circumferential surface of the burring portion. Therefore, the load can be distributed according to the length of a contact area between the inner circumferential surface and the shaft portion in the axial direction, and the stress concentration generated in the shaft portion is alleviated as compared with the case where the base material without the burring portion and the target material are simply joined to each other with the joint member. Therefore, an improvement in TSS and CTS of the joint structure can be expected.

However, in a joint structure in which the first surface which is the surface opposite to the surface facing the base material of both surfaces of the target material and the tip end portion of the burring portion are at the same position in the axial direction of the burring portion, depending on the combination of the sheet thickness of the target material and the sheet thickness of the base material, there is a problem that the joint structure cannot be formed appropriately or a problem that the load in a direction in which the shaft portion is sheared is disadvantageous.

For example, in a case where the sheet thickness of the target material is large, it is necessary to increase the length of the burring portion in the axial direction, in other words, to form a burring portion having a large height, and there is a problem that cracking of the material may occur during burring depending on the material properties of the base material (for example, hole expansibility) and the sheet thickness of the base material, and thus a burring portion having a height corresponding to the first surface of the target material cannot be formed. Further, for example, in a case where the sheet thickness of the target material is small, the height of the burring portion is also formed to be correspondingly small, and thus the length of the inner circumferential surface of the burring portion in contact with the shaft portion in the axial direction is limited. As a result, there is a problem that the area of the inner circumferential surface in contact with the shaft portion is limited, which is disadvantageous against the load in the direction in which the shaft portion is sheared.

In this way, in the joint structure in which the first surface which is the surface opposite to the surface facing the base material of both surfaces of the target material and the tip end portion of the burring portion are at the same position in the axial direction of the burring portion, there is a problem that it cannot necessarily be said to be a preferable joint structure in terms of joint strength when considering the sheet thickness of the target material to be joined to the base material.

In view of the above circumstances, there is a demand for a joint structure that can ensure preferable joint strength according to the sheet thickness of the target material to be joined to the base material.

### [Means for Solving the Problem]

The gist of the present invention is as follows.

(1) According to an aspect of the present invention, there is provided a joint structure including: a first metal sheet on which a cylindrical first rising portion is formed; at least one target material in which a through hole into which the first rising portion is inserted is formed and which is joined to the first metal sheet; and a joint member that is inserted into the first rising portion and joins the first metal sheet and the target material which are superimposed on each other to each other, wherein the joint member has a shaft portion that is inserted inside the first rising portion, and a first surface which is a surface opposite to a surface facing the first metal sheet of both surfaces of the target material and a tip end portion of the first rising portion are at different positions in an axial direction of the first rising portion.
(2) In the joint structure according to (1) above, preferably, the joint member has a pair of protruding portions that are provided at both ends of the shaft portion and protrude radially outward of the shaft portion to join the first metal sheet and the target material to each other.
(3) In the joint structure according to (1) or (2) above, preferably, the at least one target material is a second metal sheet having a second rising portion, the second rising portion is a cylindrical region rising from an edge portion of a second through hole which is the through hole provided in the second metal sheet, and the first rising portion is inserted between the second rising portion and the shaft portion.
(4) In the joint structure according to (3) above, preferably, the second rising portion is obtained by bending the second metal sheet, the first rising portion and the second rising portion rise in the same direction, and the tip end portion of the first rising portion is further away from the first metal sheet in a direction perpendicular to the first metal sheet than a tip end portion of the second rising portion.
(5) In the joint structure according to (1) or (2) above, preferably, a rising portion is provided only in the first metal sheet.
(6) In the joint structure according to any one of (2) to (5) above, preferably, a space inside the first rising portion has a curved shape that tapers from a base portion of the first rising portion toward a top portion of the first rising portion, and the protruding portion of the joint member arranged on a side of the base portion of the first rising portion has a curved shape along an inner surface of the first rising portion.
(7) In the joint structure according to any one of (2) to (6) above, preferably, the first rising portion protrudes from a surface of a sheet set constituting the joint member and has a shape that is pressed and expanded along the surface of the sheet set, and the protruding portion of the joint member in contact with the first rising portion fixes the sheet set via the first rising portion.
(8) In the joint structure according to any one of (1) to (7) above, preferably, the first rising portion protrudes from the first surface of the target material.
(9) In the joint structure according to (8) above, preferably, a protruding portion of the joint member which is arranged on a side of the first surface of the target material covers the first rising portion protruding from the first surface of the target material.
(10) In the joint structure according to (9) above, preferably, a protruding portion of the joint member which is arranged on a side of the first surface of the target material is in contact with the first surface of the target material.
(11) In the joint structure according to any one of (3) to (7) above, preferably, the second rising portion protrudes from the first surface of the target material.
(12) In the joint structure according to (11) above, preferably, a protruding portion of the joint member which is arranged on a side of the first surface of the target material covers the second rising portion protruding from the first surface of the target material.
(13) In the joint structure according to (12) above, preferably, a protruding portion of the joint member which is arranged on a side of the first surface of the target material is in contact with the first surface of the target material.
(14) In the joint structure according to any one of (3) to (7) above, preferably, both of the first rising portion and the second rising portion protrude from the first surface of the target material.
(15) In the joint structure according to (14) above, preferably, a protruding portion of the joint member which is arranged on a side of the first surface of the target material covers both of the first rising portion and the second rising portion which protrude from the first surface of the target material.
(16) In the joint structure according to (15) above, preferably, a protruding portion of the joint member which is arranged on a side of the first surface of the target material is in contact with the first surface of the target material.
(17) Preferably, the joint structure according to any one of (1) to (16) above further includes an adhesive arranged to one or more of mating surfaces of the plurality of metal sheets.

### [Effects of the Invention]

According to the joint structure of the present invention, it is possible to ensure preferable joint strength according to the sheet thickness of the target material to be joined to the base material.

### [Brief Description of Drawings]

FIG. 1A is a cross-sectional view of a joint structure according to one aspect of the present invention in which a tip end portion of a first rising portion is inside a surface of a sheet set with respect to a surface of the sheet set.
FIG. 1B is a cross-sectional view of a joint structure according to one aspect of the present invention in which a tip end portion of a first rising portion protrudes outside from a surface of a sheet set.
FIG. 2A is a schematic view of a shear stress in a joint structure of the related art.
FIG. 2B is a schematic view of a shear stress in a joint structure of the present embodiment.
FIG. 3 is a cross-sectional view of a joint structure having a second rising portion.
FIG. 4A is an example of a joint structure having three metal sheets.
FIG. 4B is an example of a joint structure having three metal sheets.
FIG. 4C is an example of a joint structure having three metal sheets.
FIG. 5A is an example of a joint structure in which a top portion of a first rising portion protrudes outside from a surface of a sheet set.
FIG. 5B is an example of a joint structure in which a top portion of a first rising portion protrudes outside from a surface of a sheet set.
FIG. 5C is an example of a joint structure in which a top portion of a first rising portion protrudes outside from a surface of a sheet set.
FIG. 6A is an example of a joint structure in which top portions of a first rising portion and a second rising portion protrude outside from a surface of a sheet set.
FIG. 6B is an example of a joint structure in which top portions of a first rising portion and a second rising portion protrude outside from a surface of a sheet set.
FIG. 6C is an example of a joint structure in which top portions of a first rising portion and a second rising portion protrude outside from a surface of a sheet set.
FIG. 7 is an example of a joint structure in which an internal space of a base portion of the first rising portion and a first protruding portion of a joint member have curved shapes.
FIG. 8 shows analysis results of a resistance force to an in-plane tensile stress in various joint structures.

### [Embodiment(s) for implementing the Invention]

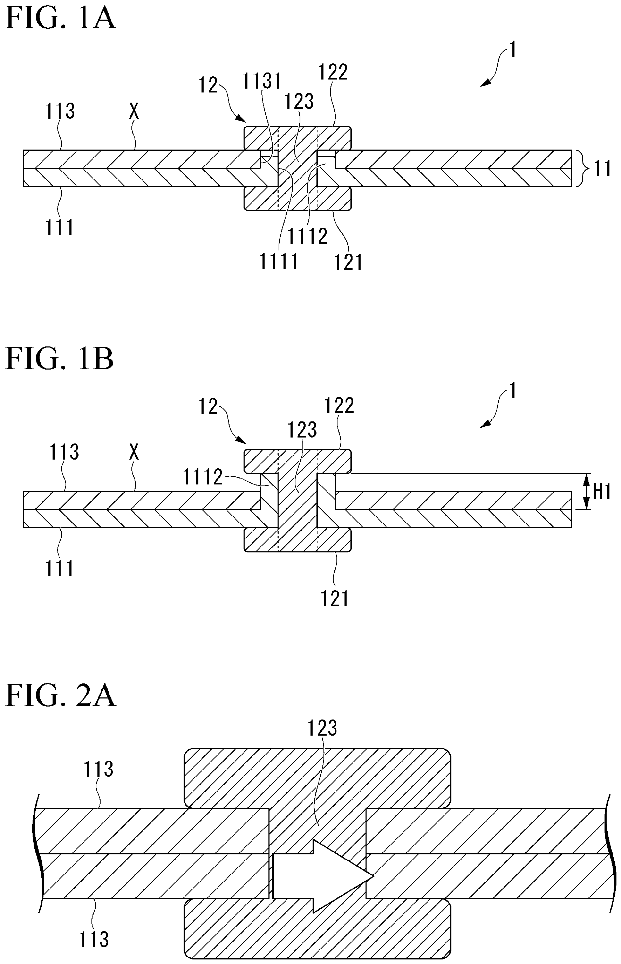

Hereinafter, a joint structure according to the present embodiment will be described with reference to the drawings. As shown in FIGS. 1A and 1B, a joint structure according to a first configuration of the present application includes; a first metal sheet 111 on which a cylindrical first rising portion 1112 is formed; at least one target material (a second metal sheet 112 or a flat metal sheet 113) in which a through hole 1131 into which the first rising portion 1112 is inserted is formed and which is joined to the first metal sheet 111; and a joint member 12 that is inserted into the first rising portion 1112 and joins the first metal sheet 111 and the target material which are superimposed on each other to each other, wherein the joint member 12 has a shaft portion 123 that is inserted inside the first rising portion 1112, and a first surface X which is a surface opposite to a surface facing the first metal sheet 111 of both surfaces of the target material and a tip end portion of the first rising portion 1112 are at different positions in an axial direction of the first rising portion 1112.

The first metal sheet 111 may be hereinafter referred to as a "base material". The first metal sheet 111 is provided with the cylindrical first rising portion 1112. The first rising portion 1112 is, for example, a burring portion.

The target material is a metal sheet in which the through hole 1131 into which the first rising portion 1112 is inserted is formed and which is joined to the base material, that is, the first metal sheet 111. The number of target materials may be one, or may be two or more.

As will be described below, the target material may have a rising portion or may not have a rising portion. In the joint structure 1 according to the present embodiment, the target material having a rising portion is referred to as a "second metal sheet 112", and the target material not having a rising portion which is joined to the first metal sheet 111 is referred to as a "flat metal sheet 113". In other words, the target material is a superordinate concept of
· the second metal sheet 112 through which the first rising portion 1112 is inserted and on which a cylindrical rising portion is formed, and
· the flat metal sheet 113 through which the first rising portion 1112 is inserted and on which a cylindrical rising portion is not formed.

In the joint structure 1 illustrated in FIGS. 1A and 1B, the target material through which the first rising portion 1112 is inserted corresponds to the flat metal sheet 113 because the target material does not have a rising portion.

The joint member 12 has the shaft portion 123 that is inserted inside the first rising portion 1112. Since the first rising portion 1112 is inserted into the through hole of the target material, it is a matter of course that the shaft portion 123 inserted inside the first rising portion 1112 is also inserted into the through hole of the target material. The axial center of the shaft portion 123 may coincide with the axial center of the burring portion.

The first surface X which is a surface opposite to a surface facing the first metal sheet 111 of both surfaces of the target material and the tip end portion of the first rising portion 1112 are at different positions in an axial direction of the first rising portion 1112.

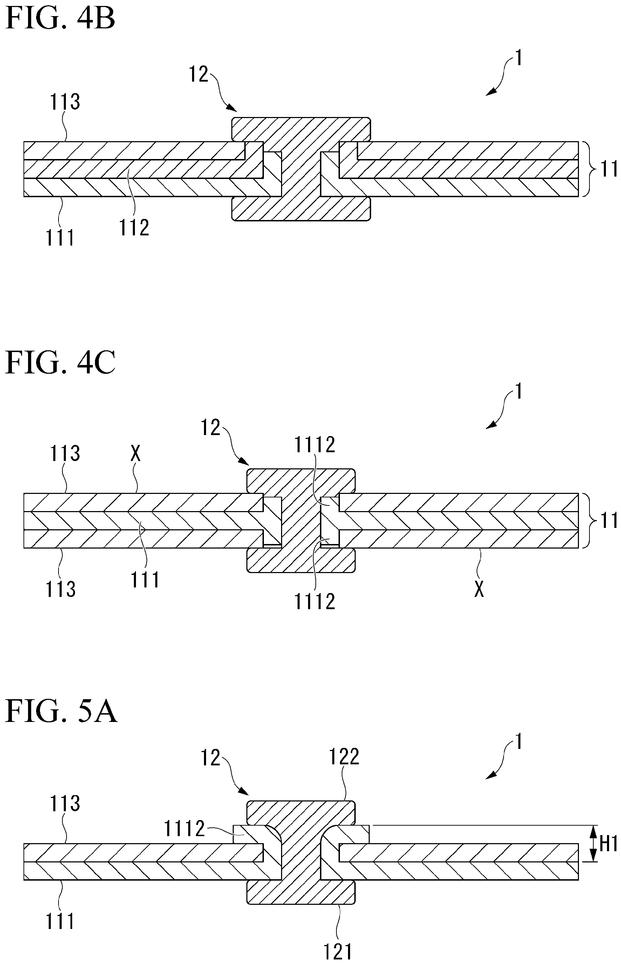

Here, in a case where the number of target materials is one, "both surfaces of the target material" means both surfaces of the target material, and in a case where the number of the target materials is two or more, "both surfaces of the target material" means two surfaces of a group of target materials which are superimposed on each other and through the first rising portion 1112 is inserted. That is, "both surfaces of the target material" is a concept that does not include the mating surfaces of the two target materials. A surface that is not in contact with the first metal sheet 111 of both surfaces of the target material is the first surface X. As illustrated in FIG. 4C, in a case where the first rising portions 1112 are provided on both surfaces of the first metal sheet 111 and the target materials are also provided on both surfaces of the first metal sheet 111, the first surface X is also present on sides of both surfaces of the first metal sheet 111. "The first surface X and the tip end portion of the first rising portion 1112 are at different positions in the axial direction" means that the first surface X and the tip end portion of the first rising portion 1112 are not present on the same plane perpendicular to the axial direction. In FIG. 1A, the tip end portion of the first rising portion 1112 is inside the through hole of the target material. In FIG. 1B, the tip end portion of the first rising portion 1112 protrudes outside the through hole of the target material. In any of the configurations shown in FIGS. 1A and 1B, the first surface X and the tip end portion of the first rising portion 1112 are at different positions in the axial direction.

The effects of the joint structure 1 according to the first configuration of the present application will be described below.

According to the first configuration of the present application, the first surface X which is the surface opposite to the surface facing the base material of both surfaces of the target material and the tip end portion of the burring portion are at different positions in the axial direction of the burring portion. Therefore, even in a case where the sheet thickness of the target material is large, there is no need to match the height of the burring portion to the sheet thickness of the target material, and it is sufficient to form a burring portion having a height suitable for the material properties of the base material (for example, hole expandability) and the sheet thickness of the base material. In this case, even if the tip end portion of the burring portion is located on a side closer to the base material than the first surface X in the axial direction without aligning the position of the tip end portion of the burring portion and the position of the first surface X of the target material to be the same in the axial direction, it is possible to form a burring portion with a sufficient height in a case where the sheet thickness of the target material is large. Therefore, in a case where the sheet thickness of the target material is large, by locating the tip end portion of the burring portion closer to the base material than the first surface X in the axial direction, it is possible to ensure joint strength while avoiding the cracking of the burring portion.

Further, according to the first configuration of the present application, the first surface X which is the surface opposite to the surface facing the base material of both surfaces of the target material and the tip end portion of the burring portion are at different positions in the axial direction of the burring portion. Therefore, even in a case where the sheet thickness of the target material is small, there is no need to match the height of the burring portion to the sheet thickness of the target material, it is possible to form a burring portion having a large height regardless of the sheet thickness of the target material, and it is possible to form a burring portion having a height that protrudes closer to a side of a tip end than the first surface X of the target material. As a result, in a case where a load is applied externally that causes the target material and the base material constituting a sheet set 11 to separate from each other, the area of the inner circumferential surface of the burring portion in contact with the shaft portion 123 can be increased in the axial direction, and the load in a direction in which the shaft portion 123 is sheared can be appropriately dispersed to ensure strength required as the joint structure.

In this way, according to the first configuration of the present application which is a joint structure in which the first surface X which is the surface opposite to the surface facing the base material of both surfaces of the target material and the tip end portion of the burring portion are at different positions in the axial direction of the burring portion, it is possible to ensure preferable joint strength according to the sheet thickness of the target material to be bonded to the base material.

Specific examples of the joint structure 1 according to the present embodiment and examples of more preferable aspects will be described in detail below.

The joint structure 1 according to the present embodiment includes the sheet set 11 in which a plurality of metal sheets are superimposed on each other and the joint member 12 that joins the sheets of the sheet set 11 to each other. Each of the metal sheets included in the sheet set 11 is provided with a through hole, and these through holes are aligned with each other. The plurality of metal sheets included in the sheet set 11 are the first metal sheet 111 and the target material described above. The through hole provided in the first metal sheet 111 is the inside of the cylindrical first rising portion 1112 described above.

The joint member 12 has the shaft portion 123. The joint member 12 may have a pair of protruding portions provided at both ends of the shaft portion 123 and protruding radially outward of the shaft portion 123. In the present embodiment, for the sake of convenience, the protruding portion on a side of the base portion of the first rising portion 1112, which will be described below, may be referred to as a first protruding portion 121, and the protruding portion on a side of the top portion of the first rising portion 1112 may be referred to as a second protruding portion 122, both are equivalent.

A dashed line shown in each of FIGS. 1A and 1B is a schematic boundary line between the shaft portion 123 and the first protruding portion 121 and between the shaft portion 123 and the second protruding portion 122. In the joint member 12, the first protruding portion 121 and the second protruding portion 122 are portions protruding radially from the shaft portion 123 at the end portions of the shaft portion 123 and occupy a ring-shaped region.

The shaft portion 123 is inserted into the through hole. The joint member 12 joins the plurality of metal sheets of the sheet set 11 to each other using the pair of protruding portions. As will be described below, the joint member 12 is, for example, a rivet or a bolt and nut combination.

In the joint structure 1 according to the present embodiment, one of the plurality of metal sheets has the first rising portion 1112. The metal sheet having the first rising portion 1112 is hereinafter referred to as the first metal sheet 111. Further, the above-described through hole provided in the first metal sheet 111 is referred to as a first through hole 1111. Further, a metal sheet not provided with a rising portion is referred to as the flat metal sheet 113. Hereinafter, the joint structure 1 will be described taking the sheet set 11 in which the first metal sheet 111 and the flat metal sheet 113 are combined as an example.

The first rising portion 1112 is a region having a cylindrical shape formed at the edge portion of the first through hole 1111. The first rising portion 1112 is, for example, a burring portion provided in the first metal sheet 111. The first rising portion 1112 has a shape rising from the edge portion of the first through hole 1111. The first rising portion 1112 is inserted between the edge portion of the through hole of the metal sheet adjacent to the first metal sheet 111 and the shaft portion 123 of the joint member 12. In other words, the first rising portion 1112 is inserted into the through hole of the metal sheet superimposed on the first metal sheet 111, and the shaft portion 123 is inserted into the first rising portion 1112. In FIG. 1, the first rising portion 1112 is inserted into the through hole 1131 of the flat metal sheet 113. However, as will be described below, the metal sheet adjacent to the first metal sheet 111 may be the second metal sheet 112 having the second rising portion 1122.

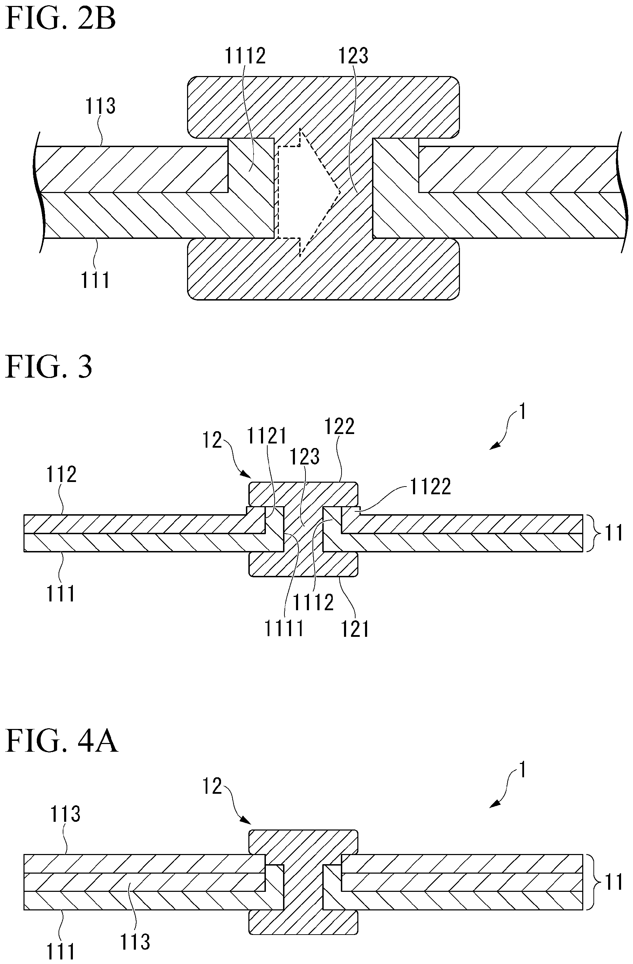

When the two metal sheets included in the sheet set 11 of the joint structure 1 are pulled in directions parallel to the sheet surface and away from each other, the first rising portion 1112 exhibits the effect of preventing fracture of the shaft portion 123. The reason for this will be explained below with reference to FIGS. 2A and 2B.

The arrow shown in FIG. 2A indicates a shear stress of a load applied when the upper metal sheet is pulled leftward while the lower metal sheet is pulled rightward in a shaft portion 123 in a joint structure of the related art not having a rising portion. The arrow shown in FIG. 2B indicates a shear stress of a load applied when the upper metal sheet, that is, the flat metal sheet 113, is pulled leftward while the lower metal sheet, that is, the first metal sheet 111, is pulled rightward in the shaft portion 123 in the joint structure 1 according to the present embodiment. As shown in FIG. 2A, in the joint structure of the related art, the contact area between the metal sheet which is an object that applies the shear stress to the shaft portion 123 and the shaft portion 123 is small. Therefore, the shear stress per contact area applied to the shaft portion 123 is large. On the other hand, as shown in FIG. 2B, in the joint structure 1 provided with the first rising portion 1112, the contact area between the first rising portion 1112 which is an object that applies the shear stress to the shaft portion 123 and the shaft portion 123 is large. Therefore, the shear stress per contact area applied to shaft portion 123 is alleviated, and fracture of shaft portion 123 is suppressed. For the reason described above, the joint structure 1 having the first rising portion 1112 has significantly higher TSS than the joint structure of the related art.

Further, the first rising portion 1112 also has a function of facilitating alignment of the through holes. In a case where a plurality of metal sheets having through holes formed in advance are superimposed on each other and then the joint member 12 is inserted into the through holes, it is necessary to align the plurality of through holes. Here, by inserting the first rising portion 1112 into the through hole of the metal sheet superimposed on the first metal sheet 111, it is possible to achieve the alignment of the through holes.

As described above, in the joint structure 1, the first surface X which is a surface opposite to a surface facing the first metal sheet 111 of both surfaces of the target material and the tip end portion of the first rising portion 1112 are at different positions in an axial direction of the first rising portion 1112. This eliminates the need to adjust the sheet thickness of the target material and the length of the first rising portion 1112. A rising portion having a suitable height for various configurations such as the material properties and sheet thickness of the first metal sheet 111 can be freely formed in the first metal sheet 111.

In the joint structure 1 according to the present embodiment, the rising portion may be provided only in the first metal sheet 111. In other words, the sheet set 11 of the joint structure 1 may be constituted by the first metal sheet 111 having the first rising portion 1112 and one or more flat metal sheets 113. By limiting the number of rising portions, the cost of processing the metal sheet can be reduced.

On the other hand, as shown in FIG. 3, the joint structure 1 may have two or more rising portions. That is, at least one of the metal sheets excluding the first metal sheet 111 may be the second metal sheet 112 having the second rising portion 1122. The metal sheet having the second rising portion 1122 is hereinafter referred to as the second metal sheet 112. Further, the above-described through hole provided in the second metal sheet 112 is referred to as a second through hole 1121. The second rising portion 1122 is a cylindrical region formed at the edge portion of the second through hole 1121. The second rising portion 1122 rises from the edge portion of the second through hole 1121. Furthermore, the second rising portion 1122 surrounds the first rising portion 1112. In other words, the first rising portion 1112 is inserted between the second rising portion 1122 and the shaft portion 123 of the joint member 12. In the joint structure 1 illustrated in FIG. 3, the tip end portion of the second rising portion 1122 and the tip end portion of the first rising portion 1112 are at the same position in the axial direction of the first rising portion 1112. Such a configuration is allowed in the joint structure 1 according to the present embodiment. It is assumed that the second rising portion 1122 is not included in the surface of the second metal sheet 112.

Here, for reference, in the present embodiment, the first metal sheet 111, the second metal sheet 112, and the flat metal sheet 113 are distinguished from each other by defining the member names as follows.
· First metal sheet 111: a metal sheet which has a rising portion and in which another rising portion is not inserted inside the rising portion
· Second metal sheet 112: a metal sheet which has a rising portion and in which another rising portion is inserted inside the rising portion
· Flat metal sheet 113: a metal sheet not having a rising portion

Two or more second metal sheets 112 may be included in the joint structure 1. Further, if the number of metal sheets constituting the sheet set 11 is four or more, two or more first metal sheets 111 may be included in the joint structure 1. For example, in a case where two sheet sets 11 included in the joint structure 1 shown in FIG. 1 are superimposed on each other and joined to each other, the joint structure 1 including two first metal sheets 111 can be manufactured.

Further, the term "metal sheet" is used as a concept to comprehensively indicate the first metal sheet 111, the second metal sheet 112, and the flat metal sheet 113. Further, the term "target material" is used as a concept to comprehensively indicate the second metal sheet 112 and the flat metal sheet 113. The term "through hole" is used as a concept to comprehensively indicate the first through hole 1111, the second through hole 1121, and the through hole 1131 of the flat metal sheet, and the term "rising portion" is used as a concept to comprehensively indicate the first rising portion 1112 and the second rising portion 1122.

One of the advantages of providing the second rising portion 1122 is that it is possible to provide a rising portion that is larger than the total sheet thickness of the sheet set 11. As a result, it is possible to suppress fracture of the shaft portion 123. Another advantage of providing the second rising portion 1122 is that the second rising portion 1122 can alleviate the reaction force per contact area applied from the first rising portion 1112. As a result, fracture of the second rising portion 1122 is suppressed.

In the configurations illustrated in FIGS. 1A, 1B, and 3, the sheet set 11 is constituted by two metal sheets. On the other hand, as shown in FIGS. 4A to 4C, the sheet set 11 may include three or more metal sheets. FIG. 4A shows a joint structure 1 constituted by a first metal sheet 111 and two flat metal sheets 113 superimposed thereon. FIG. 4B shows a joint structure 1 constituted by a first metal sheet 111, a second metal sheet 112 superimposed thereon, and a flat metal sheet 113 superimposed thereon. In either case, the rising portion can exhibit the effect of improving the TSS. Further, FIG. 4C shows a joint structure 1 constituted by a first metal sheet 111 and two flat metal sheets 113 superimposed thereon such that the first metal sheet 111 is sandwiched between the two flat metal sheets 113. In FIG. 1 and the like, the rising portion is provided to rise only from one surface of the metal sheet, but as illustrated in FIG. 4C, the first rising portion 1112 may be provided to rise from both surfaces of the metal sheet. Even in this case, the first rising portion 1112 can exhibit the effect of improving the TSS. Although not illustrated in the drawings, it is a matter of course that the flat metal sheet 113 may be disposed between the first metal sheet 111 and the second metal sheet 112, or the first metal sheet 111 may be disposed between the second metal sheet 112 and the flat metal sheet 113. The number of metal sheets may be four or more. In the joint structure 1 according to the present embodiment, the number of metal sheets included in the sheet set 11 is not limited, and the first metal sheet 111, the second metal sheet 112, and the flat metal sheet 113 can be variously combined according to the number.

In FIG. 1A and the like, the first rising portion 1112 is shown to rise vertically with respect to the first metal sheet 111. However, the first rising portion 1112 may form an angle of, for example, 45° or more and less than 90° with respect to the first metal sheet 111. The second rising portion 1122 may also rise vertically with respect to the second metal sheet 112, or may also form an angle of, for example, 45° or more and less than 90° with respect to the second metal sheet 112.

As long as the positional relationship between the first surface X of the target material and the tip end portion of the first rising portion 1112 satisfies the above requirements, the height H1 of the first rising portion 1112 and the height H2 of the second rising portion 1122 are not particularly limited, but a suitable example will be described below. Here, the height H1 of the first rising portion 1112 is a distance between a surface, on which the first rising portion 1112 is provided, of two surfaces of the first metal sheet 111 and the top of the first rising portion 1112, wherein the distance is measured in a direction perpendicular to the first metal sheet 111. The height H1 is shown in FIG. 5A and the like. Similarly, the height H2 of the second rising portion 1122 is a distance between a surface, on which the second rising portion 1122 is provided, of two surfaces of the second metal sheet 112 and the top of the second rising portion 1122, wherein the distance is measured in a direction perpendicular to the second metal sheet 112. As shown in FIG. 5A and the like, the top portion of the rising portion may be deformed. In this case, the height of the contact portion between the first rising portion 1112 and the joint member 12 may be regarded as the height H1 of the first rising portion 1112. Further, the height of the contact portion between the second rising portion 1122 and the first rising portion 1112 may be regarded as the height H2 of the second rising portion 1122.

The lower limit values of H1 and H2 are not particularly limited and only have to exceed 0 mm. This is because if the rising portion rises even slightly with respect to the sheet surface of the metal sheet, the rising portion alleviates the shear stress per unit area applied to the shaft portion 123 or the first rising portion 1112 and exhibits the effect of improving the TSS. On the other hand, it is considered that the TSS is improved as H1 and H2 increase.

Hereinafter, first, the height H1 and the like of the first rising portion 1112 will be described. Regarding H1, the upper and lower limit values of the height may be determined on the basis of the thickness of the first metal sheet 111. For example, H1 may be defined as 20% or more, 30% or more, 50% or more, 80% or more, or 100% or more of the thickness of the first metal sheet 111. On the other hand, H1 may be defined as 200% or less, 180% or less, 150% or less, or 120% or less of the thickness of the first metal sheet 111.

Further, the upper and lower limit values of the height of H1 may be determined on the basis of the thickness of the second metal sheet 112. Specifically, H1 may be defined as 20% or more, 30% or more, 50% or more, 80% or more, more than 100%, or 110% or more of the thickness of the second metal sheet 112. On the other hand, H1 may be defined as 200% or less, 180% or less, 150% or less, 120% or less, less than 100%, or 90% or less of the thickness of the second metal sheet 112.

Furthermore, the upper and lower limit values of the height of H1 may be determined on the basis of the thickness of the flat metal sheet 113. Specifically, H1 may be defined as 20% or more, 30% or more, 50% or more, 80% or more, more than 100%, or 110% or more of the thickness of the flat metal sheet 113. On the other hand, H1 may be defined as 200% or less, 180% or less, 150% or less, 120% or less, less than 100%, or 90% or less of the thickness of the flat metal sheet 113.

In addition, the upper and lower limit values of the height of H1 may be determined on the basis of the thickness of the target material. In a case where the number of target materials is two or more, the thickness of the target material means the total thickness of the plurality of target materials. H1 may be defined as 20% or more, 30% or more, 50% or more, 80% or more, more than 100%, or 110% or more of the thickness of the target material. On the other hand, H1 may be defined as 200% or less, 180% or less, 150% or less, 120% or less, less than 100%, or 90% or less of the thickness of the target material.

In a case where H1 is large, as shown in FIG. 1B, the first rising portion 1112 protrudes from the surface of the sheet set 11, that is, the first surface X of the target material. In this case, the second protruding portion 122 of the joint member 12 may not be in contact with the metal sheet arranged on the surface of the sheet set 11. In this case, the metal sheet can move in the sheet thickness direction of the sheet set 11. However, even if the metal sheet is not tightly fixed, the first rising portion 1112 can exhibit the effect of increasing the TSS of the joint structure 1. Further, in a case where the first rising portion 1112 protrudes from the first surface X of the target material, a spacer is fitted between the first surface X of the target material and the second protruding portion 122 of the joint member 12, and thus the rattling of the metal sheet may be suppressed.

As shown in FIG. 5A, the first rising portion 1112 may protrude from the surface of the sheet set 11 and have a shape that is pressed and expanded along the surface of the sheet set 11. In FIG. 5A, the second protruding portion 122 of the joint member 12 is not in contact with the flat metal sheet 113. However, the top portion of the first rising portion 1112 has a shape extending along the surface of the sheet set 11 toward the outside of the through hole. Therefore, the second protruding portion 122 of the joint member 12 can tightly fix the sheet set 11 via the first rising portion 1112.

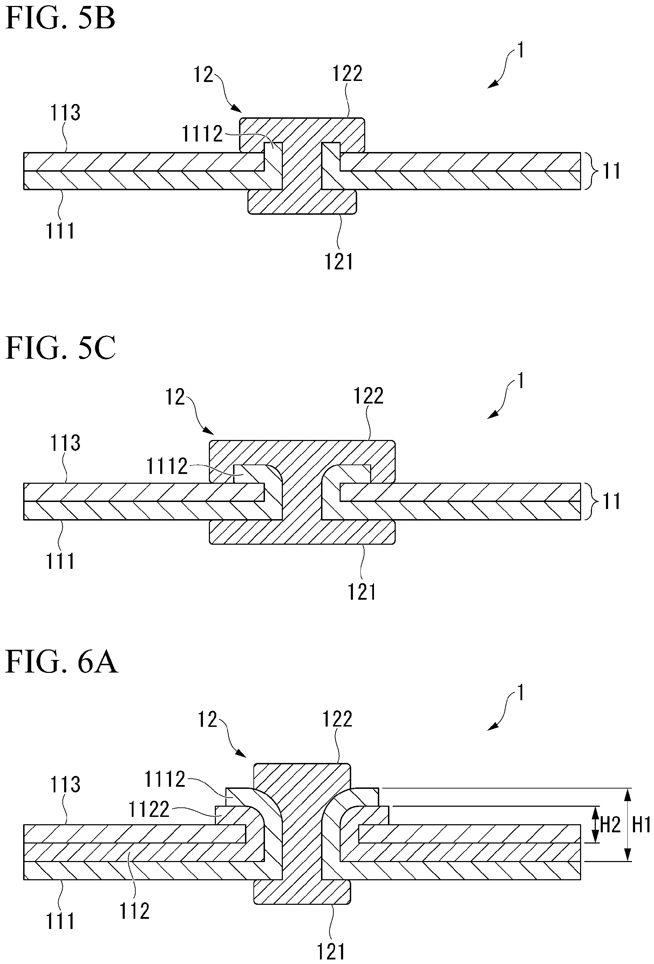

As shown in FIG. 5B, the first rising portion 1112 may protrude from the first surface of the target material (that is, the surface of the sheet set 11). In this case, the protruding portion of the joint member which is arranged on a side of the first surface of the target material may cover the first rising portion protruding from the first surface of the target material. In other words, the second protruding portion 122 which is a protruding portion in contact with the top portion of the first rising portion 1112 may cover the first rising portion 1112. Furthermore, the protruding portion of the joint member (that is, the second protruding portion 122 of the joint member 12) arranged on a side of the first surface of the target material may be in contact with the first surface of the target material (that is, the surface of the sheet set 11). As a result, the second protruding portion 122 can tightly fix the sheet set 11. Furthermore, the second protruding portion 122 has a function of preventing the deformation of the first rising portion 1112, thereby further preventing the joint member 12 from falling out of the through hole of the joint structure 1 and further improving the TSS and CTS of the joint structure 1. For example, by using a rivet as the joint member 12, arranging the tip end of the rivet on a side of the top portion of the first rising portion 1112, and plastically deforming the tip end, it is possible to manufacture the joint structure 1 having such a configuration. Further, by using a bolt and a nut as the joint member 12 and providing a concave portion capable of accommodating the top portion of the first rising portion 1112 in a countersunk portion of the bolt or the nut, it is possible to manufacture the joint structure 1 having such a structure.

It is also possible to combine the configurations of FIGS. 5A and 5B. That is, as shown in FIG. 5C, the first rising portion 1112 may protrude from the surface of the sheet set 11 and have a shape that is pressed and expanded along the surface of the sheet set 11, and the second protruding portion 122 which is a protruding portion in contacts with the top portion of the first rising portion 1112 may cover the first rising portion 1112 and be in contact the surface of the sheet set 11.

Next, the height H2 and the like of the second rising portion 1122 will be described. The lower limit value of H2 exceeds 0 mm as described above. Further, for example, H2 may be defined as 5% or more, 10% or more, 20% or more, 50% or more, or 80% or more of the height H1 of the first rising portion 1112. On the other hand, H2 may be defined as 120% or less, 100% or less, 80% or less, or 50% or less of H1.

Similar to the first rising portion 1112, the second rising portion 1122 may also protrude from the surface of the sheet set 11. As shown in FIG. 3, in a case where another metal sheet is not arranged on the surface of the second metal sheet 112, the second rising portion 1122 inevitably protrudes from the surface of the sheet set 11. On the other hand, as shown in FIG. 4B, the flat metal sheet 113 may be arranged on the surface of the second metal sheet 112, and the top portion of the second rising portion 1122 may not protrude from the sheet set 11.

Similar to the first rising portion 1112, as shown in FIG. 6A, the second rising portion 1122 may protrude from the surface of the sheet set 11 and have a shape that is pressed and expanded along the surface of the sheet set 11. In a case where the flat metal sheet 113 is arranged on the surface of the second metal sheet 112, the flat metal sheet 113 may be sandwiched between the second rising portion 1122 that is pressed and expanded and the second metal sheet 112. Further, the first rising portion 1112 may be pressed and expanded along the surface of the second rising portion 1122.

Similar to the first rising portion 1112, the second rising portion 1122 may protrude from the first surface of the target material (that is, the surface of the sheet set 11). In this case, the protruding portion of the joint member which is arranged on a side of the first surface of the target material may cover the second rising portion protruding from the first surface of the target material. In other words, the second protruding portion 122 which is a protruding portion in contact with the top portion of the second rising portion 1122 may cover the second rising portion 1122. Furthermore, the protruding portion of the joint member arranged on a side of the first surface of the target material may be in contact with the first surface of the target material (that is, the surface of the sheet set 11). As a result, the second protruding portion 122 of the joint member 12 can tightly fix the sheet set 11.

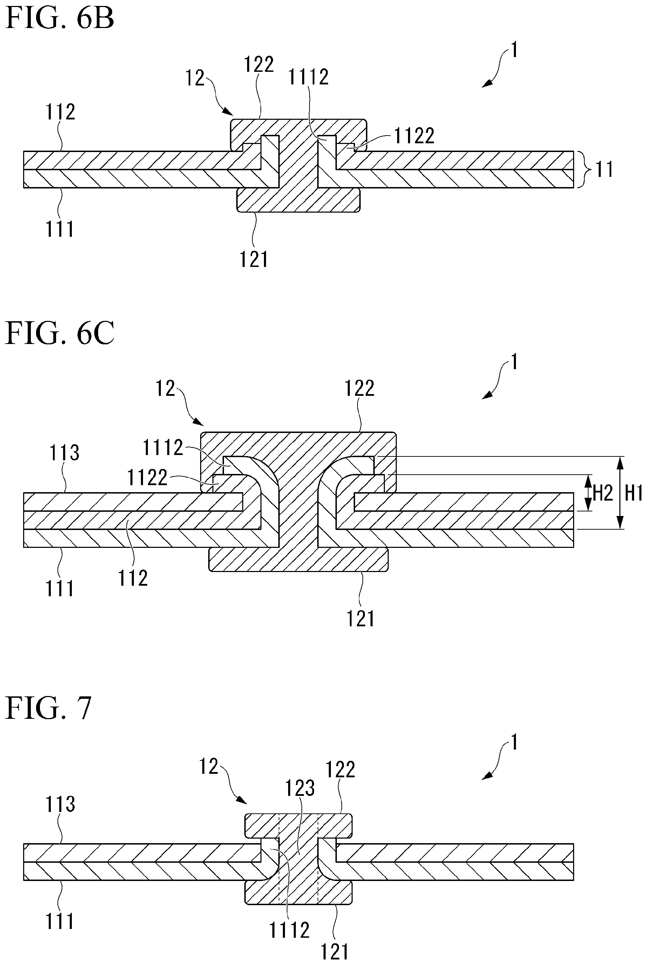

It is a matter of course that, as shown in FIG. 6B, both of the first rising portion 1112 and the second rising portion 1122 may protrude from the first surface of the target material (that is, the surface of the sheet set 11). In this case, the protruding portion of the joint member which is arranged on a side of the first surface of the target material may cover both of the first rising portion and the second rising portion which protrude from the first surface of the target material. In other words, the second protruding portion 122 of the joint member 12 may cover both of the first rising portion 1112 and the second rising portion 1122. Furthermore, the protruding portion of the joint member arranged on a side of the first surface of the target material may be in contact with the first surface of the target material (that is, the surface of the sheet set 11).

It is also possible to combine the configurations of FIGS. 6A and 6B. That is, as shown in FIG. 6C, one or both of the first rising portion 1112 and the second rising portion 1122 may protrude from the surface of the sheet set 11 (that is, the first surface X of the target material). Furthermore, one or both of the first rising portion 1112 and the second rising portion 1122 may have a shape that is pressed and expanded along the surface of the sheet set 11 or the surface of the second rising portion 1122. In addition, the second protruding portion 122 of the joint member 12 may cover one or both of the first rising portion 1112 and the second rising portion 1122 which protrude from the surface of the sheet set 11 (that is, the first surface X of the target material) and be in contact with the surface of the sheet set 11 (that is, the first surface X of the target material).

Next, the thickness of the rising portion will be described. The thicker the rising portion, the higher the resistance force of the rising portion to the shear stress, which is preferable. Therefore, the thickness of the first rising portion 1112 may be 50% or more, 60% or more, 80% or more, 100% or more, or 110% or more of the sheet thickness of the first metal sheet 111. Similarly, the thickness of the second rising portion 1122 may be 50% or more, 60% or more, 80% or more, 100% or more, or 110% or more of the sheet thickness of the second metal sheet 112. For example, by welding a metal cylinder to the edge portion of the through hole of the metal sheet, it is possible to form a rising portion having an arbitrary sheet thickness. The thickness of the first rising portion 1112 is a value measured with the surface on which the first rising portion 1112 is provided of the two surfaces of the first metal sheet as a reference. Specifically, in a cross section including the axial center of the joint member 12, a straight line is drawn along the surface on which the first rising portion 1112 is provided of the two surfaces of the first metal sheet, and the length of a portion of the straight line superimposed on the first rising portion 1112 is regarded as the thickness of the first rising portion 1112. Similarly, the thickness of the second rising portion 1122 is a value measured with the surface on which the second rising portion 1122 is provided of the two surfaces of the second metal sheet as a reference. Specifically, in a cross section including the axial center of the joint member 12, a straight line is drawn along the surface on which the second rising portion 1122 is provided of the two surfaces of the second metal sheet, and the length of a portion of the straight line superimposed on the second rising portion 1122 is regarded as the thickness of the second rising portion 1122.

A method of manufacturing the rising portion is not particularly limited. For example, by welding a metal cylinder having an inner diameter substantially the same as that of the through hole to the metal sheet, it is possible to form the rising portion. When a cross section of the joint structure 1 obtained by welding is properly prepared to be observed, it is possible to confirm the presence of a welded portion that joins the rising portion and the metal sheet to each other. Alternatively, the rising portion may be formed by burring. Burring is a machining process in which a flange is formed at the edge portion of the through hole by extending a material of a pierced portion perpendicular to the surface of the metal sheet while piercing the metal sheet. When the cross section of the joint structure 1 obtained by burring is observed, it is possible to confirm that the rising portion is obtained by bending and the rising portion and the metal sheet are integrally formed with each other.

In a case where the second rising portion 1122 is an object obtained by bending (burring) the second metal sheet 112, that is, the second rising portion 1122 is continuously formed from the second metal sheet 112, and in a case where the first rising portion 1112 and the second rising portion 1122 rise in the same direction, it is preferable that the top of the first rising portion 1112 (that is, the tip end portion of the first rising portion 1112) be further away from the first metal sheet 111 in a direction perpendicular to the surface of the first metal sheet 111 than the top of the second rising portion 1122 (that is, the tip end portion of the second rising portion 1122). For example, it is preferable that the top of the first rising portion 1112 and the top of the second rising portion 1122 have a positional relationship as shown in FIG. 6B.

In a case where the rising portion is formed by burring, the metal sheet may be thinned. By applying the shape as described above to the joint structure 1, it is possible to prevent the second metal sheet 112 from being thinned. As a result, it is possible to suppress fracture of a thinned portion when a stress in a peeling direction is applied to the joint structure 1. Therefore, the CTS of the joint structure 1 can be further increased.

The inner diameter of the rising portion may be constant in the direction perpendicular to the metal sheet, as shown in FIG. 1 and the like. On the other hand, for example, as shown in FIG. 7, a space inside the first rising portion 1112 and/or the second rising portion 1122 may have a curved shape that tapers from the base portion thereof toward the top portion thereof. The rising portion formed by burring often has such a curved shape.

In a case where the space inside the first rising portion has a curved surface shape that tapers from the base portion thereof toward the top portion thereof, as shown in FIG. 7, it is preferable that the protruding portion arranged on a side of the base portion of the first rising portion (that is, the first protruding portion 121) have a curved shape along the inner surface of the first rising portion. In other words, it is preferable that the protruding portion fills the inside of the first rising portion. In this case, the amount of protrusion of the first protruding portion 121 decreases toward the center of the joint structure 1 in the axial direction. That is, the amount of protrusion of the first protruding portion 121 continuously decreases in the axial direction. As a result, the contact area between the shaft portion 123 and the first rising portion 1112 is further increased, the shear stress is further dispersed, and the TSS of the joint structure 1 is further improved.

Further, various forms can be applied to the joint structure 1 according to the present embodiment.

The material of each of the plurality of metal sheets constituting the sheet set 11 is not particularly limited. For example, if each of the plurality of metal sheets constituting the sheet set 11 is a steel sheet, particularly a high-strength steel sheet (for example, a steel sheet having a tensile strength TS of about 590 MPa or more), the strength of the joint structure 1 can be improved, which is preferable. In addition, when the joint structure 1 according to the present embodiment is manufactured, embrittlement which leads to a decrease in CTS and TSS is not generated in the high-strength steel sheet. In a case where the tensile strength of the high-strength steel sheet is 980 MPa or more, the superiority of the riveting joint according to the present embodiment with respect to the CTS becomes further remarkable over spot welding. Each of the metal sheets constituting the sheet set 11 is more preferably a steel sheet having a tensile strength of 1180 MPa or more and is most preferably a steel sheet having a tensile strength of 1500 MPa or more. Although the upper limit of the tensile strength is not particularly limited, it may be, for example, 2700 MPa or less. Further, each of the metal sheets constituting the sheet set 11 may be an aluminum sheet, a titanium sheet, or the like. Unlike the joint obtained by welding, in the riveting joint according to the present embodiment, the plurality of metal sheets constituting the sheet set 11 may be made of different materials. For example, a combination of a steel sheet and an aluminum sheet, or a combination of a steel sheet and a titanium sheet may be used. Various surface treatments may be applied to the metal sheet. For example, the metal sheet may have GA plating, GI plating, EG plating, Zn-Mg plating, Zn-Al plating, Zn-Ni plating, Zn-Al-Mg plating, Al plating, painting, and Zn-based plating (Zn-Fe, Zn-Ni-Fe) and Al-based plating (Al-Fe-Si) which are alloyed with a base metal by hot stamping, and the like.

The sheet thickness of the metal sheet is not particularly limited and may be, for example, 0.5 mm to 3.6 mm. The thickness of each of the plurality of metal sheets constituting the sheet set 11 may be varied. Examples of a suitable combination include stacking two sheets of a sheet material having a sheet thickness of about 1.6 mm and a sheet having a sheet thickness of about 2.3 mm, or stacking three sheets of a sheet having a sheet thickness of 0.75 mm, a sheet having a sheet thickness of 1.8 mm, and a sheet having a sheet thickness of 1.2 mm. Examples of a suitable combination of the sheet materials include stacking two sheets of a sheet material having a sheet thickness of about 0.6 mm to 2.9 mm and a sheet material having a sheet thickness of about 0.6 mm to 2.9 mm, or stacking three sheets of a sheet material having a sheet thickness of about 0.6 mm to 1.6 mm, a sheet material having a sheet thickness of about 0.6 mm to 2.9 mm, and a sheet material having a sheet thickness of about 0.6 mm to 2.9 mm. The sheet material may be a formed part obtained by cold or hot press forming, cold roll forming, hydroforming, or hot blow forming. Further, the sheet material may be formed in a pipe shape.

For example, in a case where the sheet thickness of the target material is 1.6 mm or less, it is preferable that the height H1 of the first rising portion 1112 be set to a value larger than the sheet thickness of the target material and the tip end portion of the first rising portion 1112 be protruded from the first surface X of the target material. In a case where there are two or more target materials, the sheet thickness of the target materials means the total sheet thickness thereof.

The shape of the through hole can be, for example, circular or the like. On the other hand, the shape of the through hole may be polygonal such as quadrangular, pentagonal, hexagonal, and octagonal. The corners of these polygons may have curvature. Further, the shape of the through hole may be an ellipse, or a circular shape with a convex or concave part. By forming the through hole in a shape other than a circular shape, it is possible to prevent the joined metal sheets from rotating around the joint member in the through hole and to reduce the rattling at a joint portion, which is further desirable. The example of the shape of the through hole described above can also be applied to the shape of the rising portion viewed in the direction perpendicular to the metal sheet.

The joint member 12 is not particularly limited as long as it has the shaft portion 123 and the first protruding portion 121 and the second protruding portion 122 that are protruding portions at both ends of the shaft portion 123. For example, the joint member 12 may be a bolt and nut combination. The flange portion of the bolt and the nut form a pair of protruding portions of the joint structure 1 according to the present embodiment. Further, the joint member 12 may be a rivet. The rivet has a shaft portion and a flange-like head portion provided at one end of the shaft portion. In a case where the metal sheets are joined to each other using the rivet, the shaft portion is first inserted into the through hole, and then the other end of the shaft is plastically deformed to form a plastic deformation portion. These series of steps are so-called riveting. The head portion and the plastic deformation portion are the protruding portions of the joint structure 1 according to the present embodiment.

Riveting can be performed using a riveter or a spot welder and is preferable in that it can be completed in a short period of time. Moreover, the plastic deformation portion formed by riveting is preferable in that it has a shape corresponding to the shape of the material to be joined. For example, as shown in FIGS. 5B, 5C, 6B, and 6C, the configuration in which the first rising portion 1112 and/or the second rising portion 1122 protrude from the surface of the sheet set 11 and the second protruding portion 122 is formed to cover these rising portions can be easily formed by riveting. In this case, riveting only has to be performed in a state where the head portion of the rivet is disposed on a side of the base portion of the first rising portion 1112. On the other hand, for example, as shown in FIG. 7, the configuration in which the space surrounded by the tapered curved surface formed at the base portion of the first rising portion 1112 is filled with the first protruding portion 121 can also be easily formed by riveting. In this case, riveting only has to be performed in a state where the head portion of the rivet is disposed on a side of the top portion of the first rising portion 1112.

The material and thickness of the shaft portion 123 of the joint member 12 are not particularly limited and can be appropriately selected according to the joint strength required for the joint structure 1. For example, in a case where the joint structure 1 is an automobile part and the metal sheet is a high-strength steel sheet, the thickness of the shaft portion of the joint member 12 is preferably 3 mm or more, 4 mm or more, or 5 mm or more. As a result, the joint structure 1 can be provided with the joint strength required for an automobile part. The thickness of the shaft portion 123 is the minimum value of the width of the shaft portion 123 measured in the direction perpendicular to the axial center in the cross section including the axial center of the joint member 12.

In a case where the joint member 12 is a rivet, the shape of the head portion of the rivet may be a general flange shape. For example, the shape of the head portion of the rivet may be a hemispherical shape (a so-called round head), a disk shape (a so-called flat head), or a shape of flat on a side of the surface and conical at the base (a so-called countersunk head). The shape of the head portion of the rivet in a plan view may be, for example, circular and polygonal such as quadrangular or hexagonal. A concave part for positioning may be provided in the center of the head portion of the rivet on an electrode side. Further, a concave part surrounding the shaft portion (a so-called seat undercut) may be provided in the seat of the head portion of the rivet (the surface in contact with the material to be joined). Such a concave part imparts elasticity to the head portion of the rivet, thereby further increasing the fixing force of the rivet. In addition, one or more flange projections may be provided on the seat of the head portion of the rivet (the surface in contact with the material to be joined). Such a flange projection further increases the fixing force of the rivet by sinking into the material to be joined during riveting or by forming a joint portion with the material to be joined. The shape of the flange projection may be a circular shape, a polygonal shape, or a ring shape surrounding the shaft portion.

The material of the joint member 12 is not particularly limited. A material suitable for the required joint strength can be applied to the joint member 12. Examples of the material suitable for the joint member 12 include steel, stainless steel, aluminum, titanium, and the like. The joint member 12 may be one that is not surface-treated. On the other hand, in a case where the joint structure 1 requires corrosion resistance, the joint member 12 may be surface-treated. For example, the joint member 12 may be subjected to zinc-based plating, aluminum-based plating, chromium-based plating, nickel-based plating, or chromate treatment.

The size of the pair of protruding portions of the joint member 12 is also not particularly limited. A size corresponding to the size of the through hole and the required joint strength can be applied to the protruding portion within the range where the sheets of the sheet set 11 can be joined to each other. In a normal joint member, the diameter of the protruding portion is required to be larger than the diameter of each of the through holes of all the metal sheets, but in the joint structure 1 according to the present embodiment, the diameter of the protruding portion may be smaller than the diameter of each of the through holes of some metal sheets. As illustrated in FIG. 6A, in the joint structure 1 according to the present embodiment, the rising portion can be used to join the metal sheets to each other. In this case, the diameter of the through hole of the metal sheet fixed by the rising portion may be larger than the diameter of the protruding portion. However, in order to prevent the joint member 12 from falling off, the diameter of the protruding portion is preferably larger than the diameter of the narrowest portion of the internal space of the first rising portion 1112 and/or the internal space of the through hole.

In the joint structure 1 according to the present embodiment, the joint member 12 and another joint means may be combined for joining a plurality of metal sheets to each other. For example, the joint structure 1 may further have an adhesive arranged to one or more of the mating surfaces of the plurality of metal sheets. As a result, the joint strength of the joint structure 1 can be further increased. Further, a sealer may be disposed on one or more of the mating surfaces of the plurality of metal sheets. As a result, the corrosion resistance of the joint structure 1 can be further increased. The joint structure 1 may further include a welded portion such as a spot welded portion and a laser welded portion that join a plurality of metal sheets to each other.

### [Examples]

The effect of one aspect of the present invention will be described more specifically with reference to examples. However, the conditions in the examples are only one condition example employed for confirming the feasibility and effects of the present invention. The present invention is not limited to this one condition example. In the present invention, various conditions can be employed as long as the gist of the present invention does not deviate and the object of the present invention is achieved.

In order to confirm the effect of the present invention, the resistance force to the in-plane tensile stress of the joint structures A to D was analyzed by simulation.
· Joint structure A: an example of the related art in which two metal sheets not having a rising portion are joined to each other by a rivet.
· Joint structure B: an example of the present invention in which a first metal sheet having a first rising portion and a target material (a flat metal sheet) not having a rising portion are joined to each other by a rivet.
· Joint structure C: an example of the present invention in which a first metal sheet having a first rising portion and a target material (a second metal sheet) having a second rising portion are joined to each other by a rivet.
· Joint structure D: a reference example in which the target material is removed from the joint structure B.

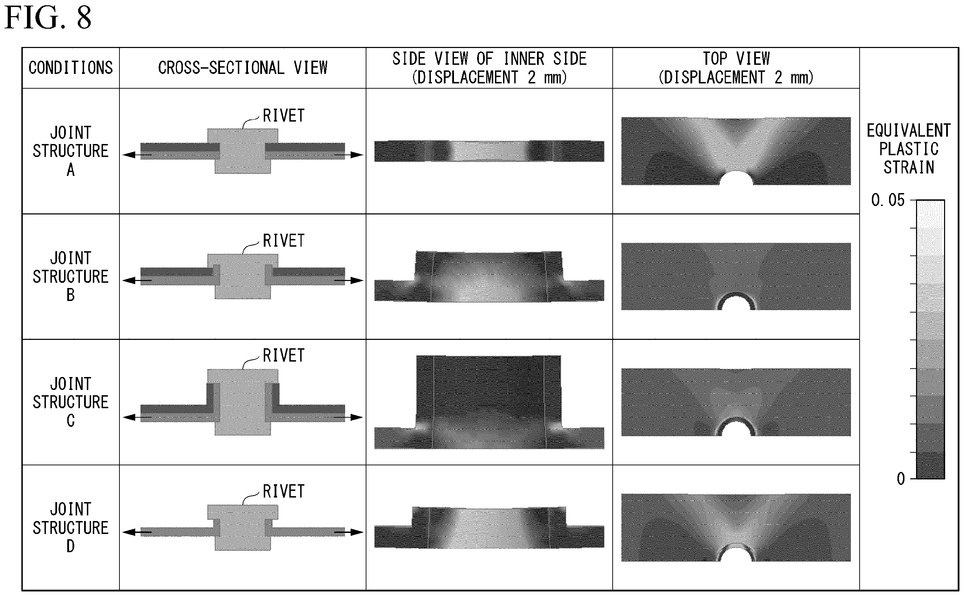

The analysis results are shown in FIG. 8.

In any of the joint structures B to D, the in-plane tensile stress was applied to the first metal sheet on which the first rising portion was formed. In the joint structure A of the related art that does not have the first rising portion, the in-plane tensile stress was applied to a lower sheet. For reference, cross-sectional views of these joint structures are shown with arrows indicating directions in which in-plane tensile stress is applied. The magnitude of the in-plane tensile stress was determined such that the inner diameter of the first rising portion or the total length of the lower sheet increased 2 mm in the direction in which the in-plane tensile stress was applied.

The "analysis result in a side view" in FIG. 8 is the analysis result of the metal sheet to which the in-plane tensile stress was applied in a side view. The "analysis result in a plan view" in FIG. 8 is the analysis result of the metal sheet to which the in-plane tensile stress was applied in a plan view. In these analysis results, the metal sheet to which the in-plane tensile stress was not applied is not shown.

The equivalent plastic strain of any of the joint structure B and the joint structure C was suppressed to a level lower than that of the joint structure A. In addition, the equivalent plastic strain of the joint structure having the second rising portion was suppressed to a level lower than that of the joint structure B.

The equivalent plastic strain of the reference example D, which is a joint structure that does not have a target material, is at a level higher than that of the joint structure B that has a target material. According to the analysis results of the joint structure D, the through hole of the target material is considered to have the effect of reducing the equivalent plastic strain of the first metal sheet by covering the first rising portion and suppressing the deformation of the first rising portion.

### [Brief Description of the Reference Symbols]

1 Joint structure
11 Sheet set
111 First metal sheet
1111 First through hole
1112 First rising portion
112 Second metal sheet (target material having rising portion)
1121 Second through hole
1122 Second rising portion
113 Flat metal sheet (target material not having rising portion)
1131 Through hole of flat metal sheet
12 Joint member
121 First protruding portion
122 Second protruding portion
123 Shaft portion
X First surface of target material

## Claims

1. A joint structure comprising:
a first metal sheet on which a cylindrical first rising portion is formed;
at least one target material in which a through hole into which the first rising portion is inserted is formed and which is joined to the first metal sheet; and
a joint member which is inserted into the first rising portion and joins the first metal sheet and the target material which are superimposed on each other to each other,
wherein the joint member has a shaft portion which is inserted inside the first rising portion, and
a first surface which is a surface opposite to a surface facing the first metal sheet of both surfaces of the target material and a tip end portion of the first rising portion are at different positions in an axial direction of the first rising portion.

2. The joint structure according to claim 1, wherein the joint member has a pair of protruding portions which are provided at both ends of the shaft portion and protrude radially outward of the shaft portion to join the first metal sheet and the target material to each other.

3. The joint structure according to claim 1 or 2, wherein the at least one target material is a second metal sheet having a second rising portion,
the second rising portion is a cylindrical region rising from an edge portion of a second through hole which is the through hole provided in the second metal sheet, and
the first rising portion is inserted between the second rising portion and the shaft portion.

4. The joint structure according to claim 3, wherein the second rising portion is obtained by bending the second metal sheet,
the first rising portion and the second rising portion rise in the same direction, and
the tip end portion of the first rising portion is further away from the first metal sheet in a direction perpendicular to the first metal sheet than a tip end portion of the second rising portion.

5. The joint structure according to claim 1 or 2, wherein a rising portion is provided only in the first metal sheet.

6. The joint structure according to claim 2, wherein a space inside the first rising portion has a curved shape which tapers from a base portion of the first rising portion toward a top portion of the first rising portion, and
the protruding portion of the joint member arranged on a side of the base portion of the first rising portion has a curved shape along an inner surface of the first rising portion.

7. The joint structure according to claim 2, wherein the first rising portion protrudes from a surface of a sheet set constituting the joint member and has a shape which is pressed and expanded along the surface of the sheet set, and
the protruding portion of the joint member in contact with the first rising portion fixes the sheet set via the first rising portion.

8. The joint structure according to claim 1, wherein the first rising portion protrudes from the first surface of the target material.

9. The joint structure according to claim 8, wherein a protruding portion of the joint member which is arranged on a side of the first surface of the target material covers the first rising portion protruding from the first surface of the target material.

10. The joint structure according to claim 9, wherein a protruding portion of the joint member which is arranged on a side of the first surface of the target material is in contact with the first surface of the target material.

11. The joint structure according to claim 3, wherein the second rising portion protrudes from the first surface of the target material.

12. The joint structure according to claim 11, wherein a protruding portion of the joint member which is arranged on a side of the first surface of the target material covers the second rising portion protruding from the first surface of the target material.

13. The joint structure according to claim 12, wherein a protruding portion of the joint member which is arranged on a side of the first surface of the target material is in contact with the first surface of the target material.

14. The joint structure according to claim 3, wherein both of the first rising portion and the second rising portion protrude from the first surface of the target material.

15. The joint structure according to claim 14, wherein a protruding portion of the joint member which is arranged on a side of the first surface of the target material covers both of the first rising portion and the second rising portion which protrude from the first surface of the target material.

16. The joint structure according to claim 15, wherein a protruding portion of the joint member which is arranged on a side of the first surface of the target material is in contact with the first surface of the target material.

17. The joint structure according to claim 1 or 2, further comprising an adhesive arranged to one or more of mating surfaces of the plurality of metal sheets.
